# DEMANDE DE BREVET EUROPEEN

(11) **EP 2 886 760 A1**
(43) Date de publication de la demande: **24.06.2015**
(21) Numéro de dépôt: 14197520.1
(22) Date de dépôt: 12.12.2014
(51) Int. Cl.: E05B 81/76, B60Q 3/02, E05B 17/10

(54) **BOÎTIER DE DISPOSITIF ÉLECTRONIQUE DESTINÉ À ÊTRE PLACÉ AU SEIN D'UNE POIGNÉE DE PORTE DE VÉHICULE AUTOMOBILE, DISPOSITIF ÉLECTRONIQUE CORRESPONDANT ET POIGNÉE DE PORTE CORRESPONDANTE**

(30) Priorité: 18.12.2013 FR 1362886
(71) Demandeur: Filec, 79600 Airvault (FR)
(72) Inventeur: Herpin, Florent, 79600 Airvault (FR)
(74) Mandataire: Casalonga

(57) **Abrégé**

Ce boîtier de dispositif électronique destiné à être placé au sein d'une poignée de porte de véhicule automobile comporte des moyens de raccordement d'une diode électroluminescente (2) et des moyens de raccordement d'un bouton de commande (3) de la fermeture dudit véhicule automobile.

L'invention vise également un dispositif électronique et une poignée de porte de véhicule automobile.

## Description

L'invention concerne les boîtiers de dispositifs électroniques, plus précisément les boîtiers de dispositifs électroniques disposés ou destinés à être disposés à l'intérieur de poignées de porte de véhicule automobile.

Les véhicules automobiles peuvent être ouverts au moyen de clés sans contact, généralement désignées par l'expression anglo-saxonne « Smart-key ». Ces clés sans contact déverrouillent la porte du véhicule si elles sont situées à proximité du véhicule et elles permettent ensuite d'autoriser le démarrage du véhicule. Pour verrouiller un véhicule, il est possible d'utiliser un bouton situé sur la clé sans-contact lorsqu'elle est située au voisinage du véhicule, mais il est également généralement possible de presser un bouton situé à l'extérieur du véhicule pour le verrouiller, la clé devant être située à l'extérieur du véhicule et à proximité. Ce bouton est généralement disposé au sein des poignées de porte des véhicules.

De ce fait, un faisceau de câbles est amené dans la poignée pour être connecté au bouton. Comme on le conçoit, l'ensemble formé par le bouton et le faisceau de câbles doit être étanche et robuste, compte tenu de sa localisation sur la poignée de porte.

Certaines poignées de porte de véhicules automobiles comportent également des diodes électroluminescentes de balisage utilisées pour éclairer la partie située devant la porte du véhicule pour faciliter l'accès au véhicule. Ces diodes nécessitent également d'utiliser un faisceau de câbles pour leur opération.

L'implémentation d'un bouton et d'une diode dans une poignée de porte est complexe, et l'assemblage obtenu peut être volumineux et lourd. En outre, l'assemblage obtenu peut ne pas être suffisamment robuste, et son coût peut être élevé.

L'invention a donc pour but de remédier aux problèmes cités, et notamment de faciliter l'implémentation d'une diode et d'un bouton au sein d'une poignée de porte de véhicule automobile, d'obtenir un assemblage moins volumineux, plus léger, robuste et peu onéreux.

L'invention a donc pour objet un boîtier de dispositif électronique destiné à être placé au sein d'une poignée de porte de véhicule automobile.

Selon une caractéristique générale, le boîtier comporte des moyens de raccordement d'une diode électroluminescente et des moyens de raccordement d'un bouton de commande de la fermeture dudit véhicule automobile.

Ainsi, c'est en utilisant un boîtier commun aux deux composants, la diode et le bouton de fermeture, que l'on facilite l'implémentation des deux composants. Un unique faisceau de câbles peut être relié au boîtier, ce qui facilite davantage l'installation du boîtier. Aussi, il n'y a aucun jeu entre les deux composants et l'assemblage obtenu est ainsi plus robuste et moins volumineux. L'assemblage obtenu est plus léger, et il est moins onéreux.

Le boîtier peut avoir une face inférieure ouverte. On peut ainsi faire passer une carte de circuit imprimé comportant une diode et un bouton par cette face ouverte pour le raccordement des deux composants.

Le boîtier peut comporter en outre des ouvertures pour le passage de fils électriques, par exemple des fils d'un faisceau de câbles.

L'invention a également pour objet un dispositif électronique comportant un boîtier tel que défini ci-avant et une carte de circuit imprimé disposée dans le boîtier, la carte de circuit imprimé comportant au moins une diode électroluminescente raccordée au boîtier et un bouton de commande de la fermeture dudit véhicule automobile raccordé au boîtier.

La carte de circuit imprimé peut par exemple être insérée à travers une face inférieure ouverte opposée à la face comportant l'ouverture pour le bouton de commande dans un boîtier qui comporte une telle face inférieure ouverte.

Le dispositif peut comporter une couche de résine encapsulant ladite carte de circuit imprimé dans ledit boîtier.

On obtient ainsi une bonne étanchéité, et également un bon maintien de fils de connexion arrivant dans le boîtier qui peuvent être partiellement noyés dans la résine et donc bien maintenus.

Le bouton peut comporter une membrane souple s'étendant depuis la carte de circuit imprimé, et un élément rigide disposé sur la membrane souple. L'élément rigide est celui qui sera en contact avec l'utilisateur. En d'autres termes, ici, par bouton, on vise l'ensemble des éléments qui participent à l'actionnement du composant électronique, c'est-à-dire ici la membrane souple et l'élément rigide, et éventuellement une portion électronique.

Enfin, l'invention a pour objet une poignée de porte de véhicule automobile comportant un dispositif tel que défini ci-avant.

La poignée de porte peut comporter en outre un guide de lumière reliant ladite diode du dispositif à une ouverture de la poignée.

D'autres buts, caractéristiques et avantages apparaîtront à la lecture de la description suivante donnée uniquement en tant qu'exemple non limitatif et faite en référence aux dessins annexés sur lesquels :
- les figures 1 et 2 sont des vues en perspective d'un dispositif électronique selon un mode de réalisation de l'invention,
- la figure 3 est une vue en coupe d'un dispositif électronique selon un mode de réalisation de l'invention,
- la figure 4 illustre une carte de circuit imprimé selon un aspect de l'invention,
- la figure 5 est une vue en perspective représentant un dispositif électronique au sein d'une poignée de porte de véhicule automobile, et
- la figure 6 est une vue en perspective d'une poignée de porte de véhicule automobile selon un mode de réalisation de l'invention.

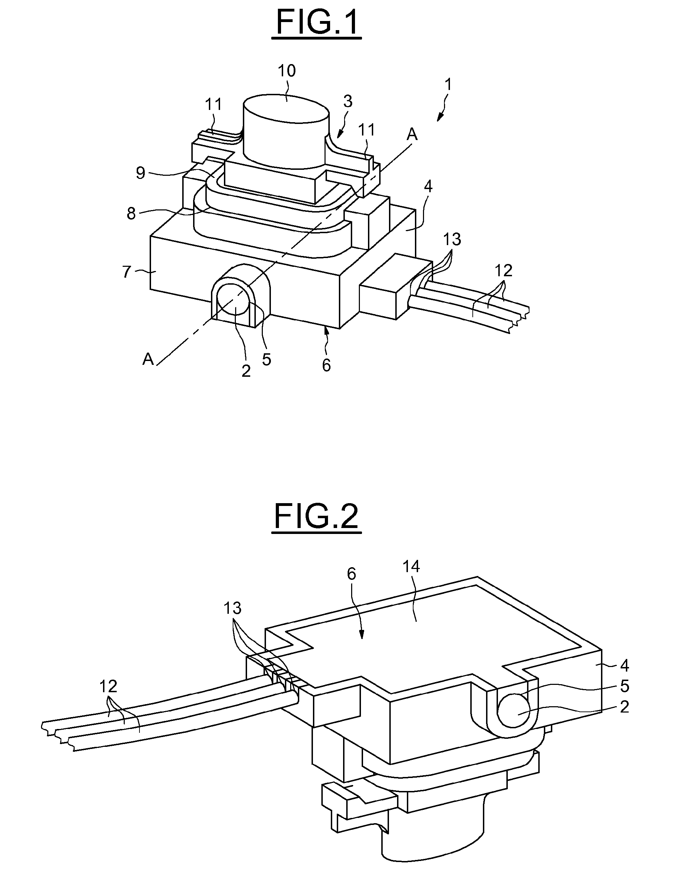

Sur la figure 1, on a représenté un dispositif électronique 1 équipé d'une diode électroluminescente 2 et d'un bouton 3. Le dispositif électronique 1 est destiné à être placé au sein d'une poignée de porte de véhicule automobile de façon à ce que la poignée de porte intègre une fonction d'éclairage et une fonction de verrouillage commandant la fermeture du véhicule automobile.

Pour permettre une implémentation facile de la diode électroluminescente 2 et du bouton 3 au sein d'une poignée, le dispositif électronique 1 comporte un boîtier 4.

Le boîtier 4 comporte des moyens de fixation mécanique et de raccordement électrique d'une diode comportant ici un renfoncement 5 s'étendant depuis une face inférieure 6 du boîtier pour être saillante d'une face latérale 7 du boîtier. On peut noter que d'autres dispositions de diodes peuvent être envisagées, en fonction de l'application et de la poignée au sein de laquelle le dispositif sera installé.

Le boîtier comporte en outre des moyens de raccordement d'un bouton, comportant une ouverture 8. L'ouverture 8 est comblée par une membrane souple 9 du bouton 3, sur laquelle un élément rigide 10 est disposé. L'élément rigide 10 est destiné à être pressé par l'utilisateur pour le verrouillage du véhicule. L'élément rigide 10 est muni de bras 11 qui délimitent la course de l'élément rigide et empêchent l'insertion complète de la partie rigide 10 dans le boîtier 4 lors de la pression du bouton.

Alors que dans l'art antérieur des faisceaux de câbles distincts alimentent d'une part une diode et d'autre part un bouton, ici, un seul faisceau de trois câbles 12 est utilisé. A cet effet, le boîtier 4 est muni de trois ouvertures en forme de renfoncement 13 depuis la face inférieure 6.

Sur la figure 2, on a représenté le dispositif électronique 1 de manière à rendre visible la face inférieure 6 décrite en se référant à la figure précédente. La face inférieure du boîtier 4 est ouverte, et elle est comblée ici par une résine 14, par exemple par une injection bi-composant de type époxy ou une résine bi-composant de type polyuréthane.

Comme on peut le voir sur cette figure 2, le renfoncement 5 des moyens de fixation mécanique et de raccordement de la diode 2 et les renfoncements 13 du faisceau de câble 12 permettent, préalablement à l'encapsulation par la résine 14, d'insérer par translation la diode 2 et les câbles du faisceau de câble 12.

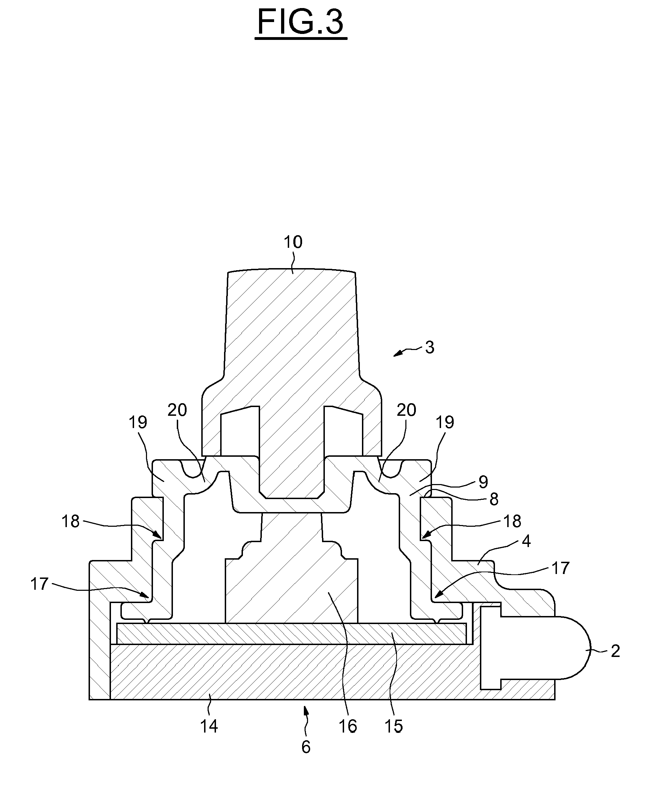

La figure 3 est une vue en coupe du dispositif électronique 1 passant par l'axe A-A de la figure 1. Sur cette figure, on a représenté la diode 2 et le bouton 3 montés sur une carte de circuit imprimé 15. La carte de circuit imprimé 15 peut être insérée par translation à travers la face ouverte 6 du boîtier 4.

En outre, le bouton 3 comporte une portion électronique 16 qui coopère avec la membrane souple 9 qui elle-même coopère avec l'élément rigide 10. Le bouton 3 comporte ainsi au moins ces trois éléments : l'élément rigide 10, la membrane souple 9 et la portion électronique 16.

Le boîtier 4 comporte des premiers épaulements 17 contre lesquels la membrane 9 est partiellement maintenue. En outre, le boîtier 4 comporte des deuxièmes épaulements 18 pour davantage maintenir la membrane 9 dont la forme correspond aux parois intérieures du boîtier 4.

Pour obtenir une bonne étanchéité, la membrane 9 est munie d'un anneau saillant 19 qui repose sur des parois extérieures du boîtier 4 autour de l'ouverture 8. Un anneau aminci 20 est disposé de manière concentrique par rapport à l'anneau saillant 19. Ainsi, lors de la pression du bouton 3, l'anneau saillant 19 et les parties de la membrane 9 disposées contre les parois du boîtier 4 restent immobiles, et l'anneau aminci 20 permet une déformation de la membrane 9 pour actionner la portion électronique 16.

L'étanchéité du dispositif est donc obtenue au moyen de la membrane 9 du bouton 3, et par la résine 14.

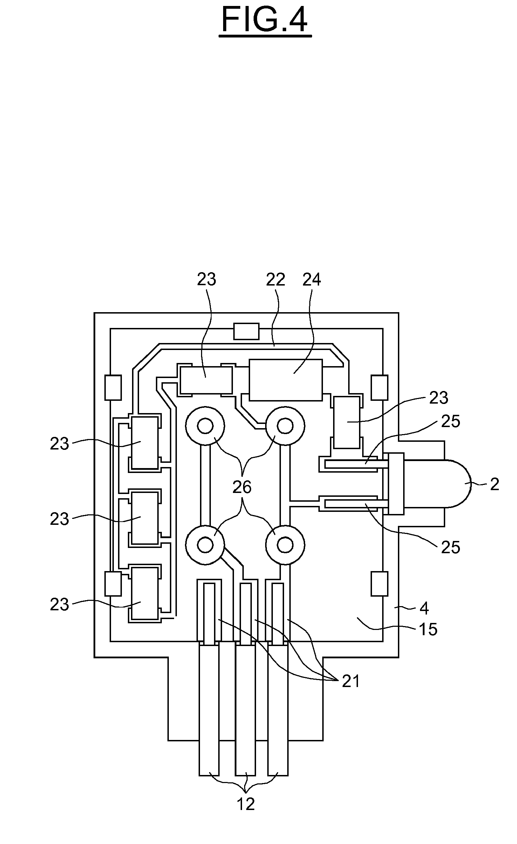

Sur la figure 4, on a représenté de manière plus détaillée la carte de circuit imprimé 15. Pour des raisons de simplification, le bouton 3 n'est pas représenté sur cette figure. Comme on peut le voir sur la figure, la carte de circuit imprimé 15 a des dimensions qui permettent son passage par la face ouverte du boîtier 4.

Le circuit imprimé comporte des zones de raccordement 21 des câbles du faisceau de câble 12, des zones de raccordement 25 de la diode 2 et des zones de raccordement 26 du bouton 3. Le circuit imprimé 15 comporte également des pistes conductrices 22 ainsi qu'une pluralité de composants, ici des résistances 23, une diode Zener 24.

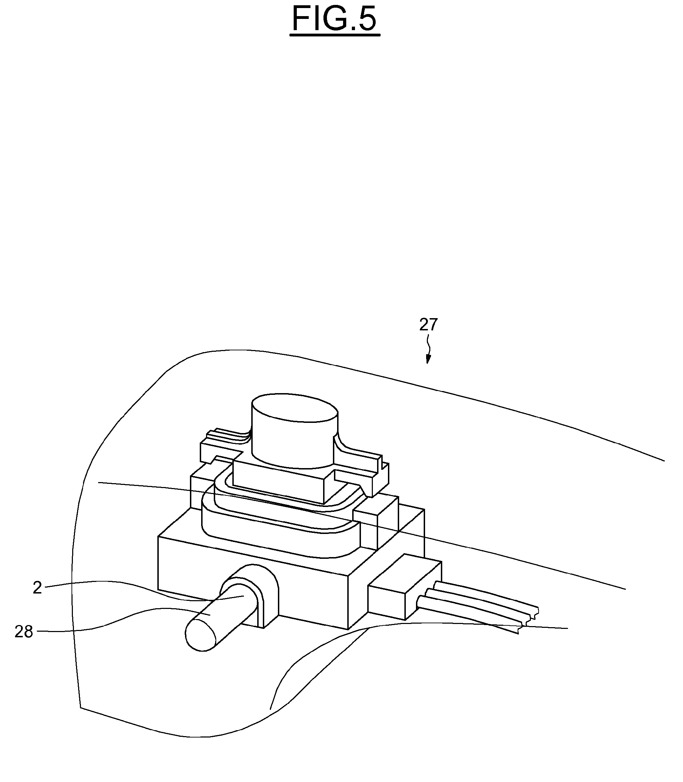

Sur la figure 5, on a représenté partiellement une poignée de porte de véhicule automobile 27 équipée d'un dispositif électronique 1. Sur cette figure, on a représenté la diode 2 débouchant sur un guide de lumière 28 de la poignée.

Le guide de lumière 28 est ici rectiligne, néanmoins, l'homme du métier peut ménager d'autres formes pour amener de la lumière à d'autres endroits au voisinage de la poignée 27.

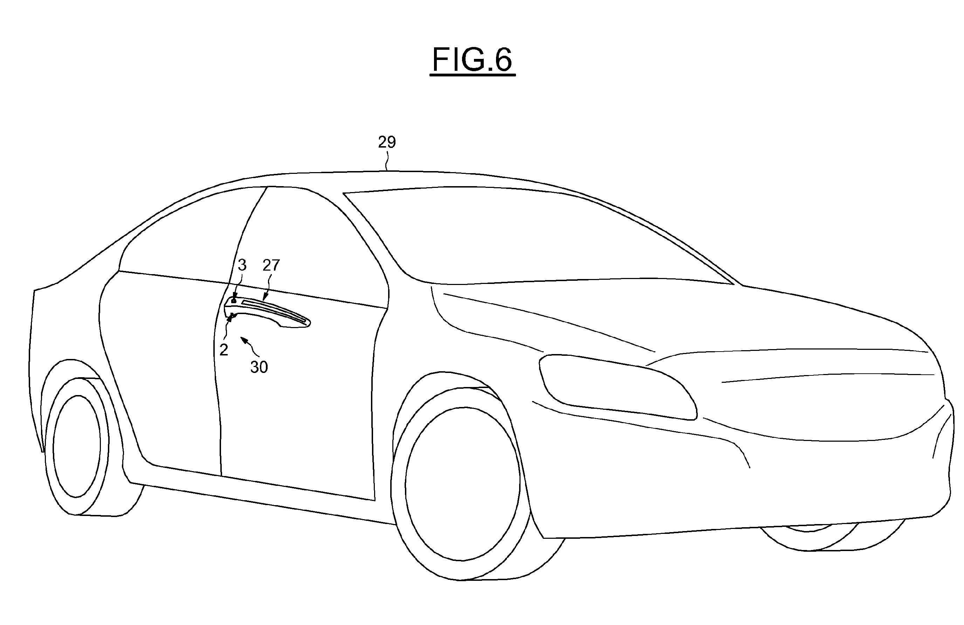

La poignée 27 a été représentée entière sur la figure 6, montée sur un véhicule automobile 29. Le bouton 3 est ici accessible latéralement par rapport au véhicule, et une zone 30 peut être illuminée par la diode 2. La zone 30 s'étend jusqu'à illuminer la partie située devant la porte du véhicule.

L'invention permet d'implémenter facilement deux fonctions électroniques au sein d'un espace réduit tel qu'une poignée de porte de véhicule automobile.

L'utilisation d'un boîtier permet en outre d'obtenir un assemblage plus robuste.

## Revendications

1. Boîtier de dispositif électronique destiné à être placé au sein d'une poignée de porte (27) de véhicule automobile, **caractérisé en ce que** le boîtier comporte des moyens de raccordement d'une diode électroluminescente (2) et des moyens de raccordement d'un bouton de commande (3) de la fermeture dudit véhicule automobile.

2. Boîtier selon la revendication 1, dans lequel le boîtier a une face inférieure (6) ouverte.

3. Boîtier selon la revendication 1 ou 2, comportant en outre des ouvertures (13) pour le passage de fils électriques.

4. Dispositif électronique comportant un boîtier (4) selon l'une quelconque des revendications 1 à 3 et une carte de circuit imprimé (15) disposée dans le boîtier, la carte de circuit imprimé comportant au moins une diode électroluminescente raccordée au boîtier et un bouton de commande de la fermeture dudit véhicule automobile raccordé au boîtier.

5. Dispositif selon la revendication 4, comportant une couche de résine (14) encapsulant ladite carte de circuit imprimé dans ledit boîtier.

6. Dispositif selon l'une des revendications 4 et 5, dans lequel le bouton comporte une membrane souple (9) s'étendant depuis la carte de circuit imprimé, et un élément rigide (10) disposé sur la membrane souple.

7. Poignée de porte de véhicule automobile, comportant un dispositif électronique (1) selon l'une quelconque des revendications 4 à 6.

8. Poignée de porte de véhicule automobile selon la revendication 7, comportant en outre un guide de lumière (28) reliant ladite diode du dispositif à une ouverture de la poignée.
